(19) Europäisches Patentamt
European Patent Office
Office européen des brevets

(11) **EP 4 738 258 A1**

(12) **EUROPEAN PATENT APPLICATION**
published in accordance with Art. 153(4) EPC

(43) Date of publication:
06.05.2026 Bulletin 2026/19

(21) Application number: 24855775.3

(22) Date of filing: **19.08.2024**

(51) International Patent Classification (IPC):
*G06T 7/80* (2017.01)      *G01S 7/40* (2006.01)
*G01S 7/497* (2006.01)     *G01S 7/52* (2006.01)
*G01C 25/00* (2006.01)

(52) Cooperative Patent Classification (CPC):
**G06T 7/80; G01C 25/00; G01S 7/40; G01S 7/497;
G01S 7/52;** G06T 2207/10016; G06T 2207/20084;
G06T 2207/30252

(86) International application number:
**PCT/CN2024/113087**

(87) International publication number:
**WO 2025/040052 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 24.08.2023 CN 202311076082

(71) Applicant: **Huawei Technologies Co., Ltd.**
**Shenzhen, Guangdong 518129 (CN)**

(72) Inventors:
• **LUO, Wentao**
**Shenzhen, Guangdong 518129 (CN)**
• **LI, Xiaosong**
**Shenzhen, Guangdong 518129 (CN)**
• **WANG, Yaoyuan**
**Shenzhen, Guangdong 518129 (CN)**
• **ZHANG, Ziyang**
**Shenzhen, Guangdong 518129 (CN)**
• **FU, Sheng**
**Shenzhen, Guangdong 518129 (CN)**
• **ZHANG, Jingyi**
**Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **CALIBRATION METHOD AND APPARATUS FOR SENSOR**

(57)    A method and an apparatus for calibrating a sensor are provided, and relate to the field of sensor technologies. The sensor is one of at least one sensor disposed on a vehicle. The method may include: identifying at least one traffic participant in an environment in which the vehicle is located; obtaining a first data set associated with the at least one traffic participant, where the first data set includes standardized data of the at least one traffic participant; determining a driving status of the vehicle; and if the vehicle does not shake, performing intrinsic parameter calibration on the sensor based on the first data set; or if the vehicle shakes, performing joint calibration on an extrinsic parameter of the at least one sensor of the vehicle based on the first data set. This method is used to implement universal adaptive calibration on a plurality of sensors, so as to improve fusion precision of sensing information of the sensors.

FIG. 3

The flowchart contains:
- S310: Identify at least one traffic participant in an environment in which a vehicle is located
- S320: Obtain a first data set associated with the at least one traffic participant, where the first data set includes standardized data of the at least one traffic participant
- S330: Determine a driving status of the vehicle
- S340: If the vehicle does not shake, perform intrinsic parameter calibration on a sensor based on the first data set
- S350: If the vehicle shakes, perform joint calibration on an extrinsic parameter of at least one sensor of the vehicle based on the first data set

**Description**

CROSS-REFERENCE TO RELATED APPLICATIONS

This application claims priority to Chinese Patent Application No. 202311076082.3, filed with the China National Intellectual Property Administration on August 24, 2023 and entitled "METHOD AND APPARATUS FOR CALIBRATING SENSOR", which is incorporated herein by reference in its entirety.

TECHNICAL FIELD

This application relates to the field of sensor technologies, and in particular, to a method and an apparatus for calibrating a sensor.

BACKGROUND

With rapid development of intelligent vehicle technologies, an intelligent driving function of a vehicle is increasingly improved, and increasingly more sensors are installed on the vehicle. Measurement precision of the vehicle-mounted sensors is critical to implementation of the intelligent driving function and driving safety.

Most sensors need to be calibrated after installation to ensure measurement precision of the sensors. Sensor calibration includes intrinsic parameter calibration and extrinsic parameter calibration of the sensor. An intrinsic parameter is a group of parameters that determine an internal mapping relationship of the sensor, and an extrinsic parameter is a parameter that determines a conversion relationship between a coordinate system of the sensor and a specified coordinate system. The intrinsic parameter calibration is used to obtain the internal mapping relationship of the sensor, and the extrinsic parameter calibration is used to convert two or more sensors into a unified spatial coordinate system. Currently, a frequently used method for calibrating a sensor either needs to use a three-dimensional radar sensor as a medium to implement calibration, which lacks a universal online method for calibrating a sensor, or needs a large quantity of data sets to train a deep learning model used for calibration, which has high training difficulty. This is not applicable to real-time calibration on a plurality of types of vehicle-mounted sensors in a vehicle scenario.

Therefore, how to design a universal method for calibrating a vehicle-mounted sensor is still an important problem that needs to be urgently resolved.

SUMMARY

Embodiments of this application provide a method and an apparatus for calibrating a sensor, to implement universal adaptive calibration on a plurality of sensors, so as to improve fusion precision of sensing information of the sensors.

According to a first aspect, an embodiment of this application provides a method for calibrating a sensor. The method may be implemented by a calibration apparatus. The calibration apparatus may be an independent device, or may be a chip or a component in the device, or may be software, and the calibration apparatus may be deployed on a vehicle side, a cloud, a roadside device, a remote server, a local server, or the like. A product form and a deployment manner of the calibration apparatus are not limited in this application.

The sensor may be one of at least one sensor disposed on a vehicle. The method may include: identifying at least one traffic participant in an environment in which the vehicle is located; obtaining a first data set associated with the at least one traffic participant, where the first data set includes standardized data of the at least one traffic participant; determining a driving status of the vehicle; and if the vehicle does not shake, performing intrinsic parameter calibration on the sensor based on the first data set; or if the vehicle shakes, performing joint calibration on an extrinsic parameter of the at least one sensor of the vehicle based on the first data set.

According to the foregoing method, the calibration apparatus can use a scenario element (standardized traffic participant) as a reference to replace a calibration target, to perform intrinsic parameter calibration and/or extrinsic parameter calibration on a vehicle-mounted sensor. The method for calibrating the vehicle-mounted sensor can be decoupled from a medium like a three-dimensional radar sensor, and a large quantity of data sets are not needed to train a deep learning model used for calibration. This can greatly reduce calibration time and labor costs, so that the calibration method is universal, an error of joint calibration on a plurality of sensors is reduced, and fusion precision of sensor information is improved.

With reference to the first aspect, in a possible implementation, the sensor includes a camera, and if the vehicle does not shake, the performing intrinsic parameter calibration on the sensor based on the first data set includes: if the vehicle does not shake within first duration, performing, by using the first data set as a calibration target, intrinsic parameter calibration on the sensor based on a plurality of data frames that are collected within the first duration and that are relative to a same traffic participant.

With reference to the first aspect, in a possible implementation, the sensor includes an inertial measurement unit IMU, and if the vehicle does not shake, the performing intrinsic parameter calibration on the sensor based on the first data set includes: if the vehicle does not shake within second duration, performing, by using the first data set as the calibration target, intrinsic parameter calibration on the sensor based on pose sensing data collected within the second duration.

With reference to the first aspect, in a possible implementation, if the vehicle shakes, the performing joint calibration on the extrinsic parameter of the at least one sensor of the vehicle based on the first data set includes: in a process in which the vehicle shakes, performing, by using the first data set as the calibration target, joint calibration on the extrinsic parameter of the at least one sensor of the vehicle based on sensing data of the traffic participant collected in the shake process.

With reference to the first aspect, in a possible implementation, the determining the driving status of the vehicle includes: obtaining at least one driving parameter via the at least one sensor, where the at least one sensor includes at least one of the following types of sensors: gyroscope, accelerometer, or magnetometer; and determining the driving status of the vehicle based on the at least one driving parameter.

With reference to the first aspect, in a possible implementation, the obtaining the first data set associated with the at least one traffic participant includes: receiving the first data set from a cloud server.

With reference to the first aspect, in a possible implementation, the first data set is obtained based on a target tracking model, and the target tracking model includes a deep network model.

With reference to the first aspect, in a possible implementation, the method further includes: assigning a weight to a confidence level of the at least one sensor based on prior information, to obtain a weight factor associated with the at least one sensor; obtaining a pose estimation result of the vehicle based on the weight factor associated with the at least one sensor and sensing data of the at least one sensor; and performing error compensation on a vehicle-mounted component of the vehicle based on the pose estimation result and a three-dimensional rigid body model.

With reference to the first aspect, in a possible implementation, the vehicle-mounted component includes an optical sensing device of the vehicle, and the optical sensing device includes at least one of the following: augmented reality head-up display AR-HUD component, optical projection component, and intelligent ranging component.

According to a second aspect, an embodiment of this application provides an apparatus for calibrating a sensor, where the sensor is one of at least one sensor disposed on a vehicle. The apparatus includes: an identification unit, configured to identify at least one traffic participant in an environment in which the vehicle is located; an obtaining unit, configured to obtain a first data set associated with the at least one traffic participant, where the first data set includes standardized data of the at least one traffic participant; a determining unit, configured to determine a driving status of the vehicle; an intrinsic parameter calibration unit, configured to: if the vehicle does not shake, perform intrinsic parameter calibration on the sensor based on the first data set; and an extrinsic parameter calibration unit, configured to: if the vehicle shakes, perform joint calibration on an extrinsic parameter of the at least one sensor of the vehicle based on the first data set.

With reference to the second aspect, in a possible implementation, the sensor includes a camera, and the intrinsic parameter calibration unit is specifically configured to: if the vehicle does not shake within first duration, perform, by using the first data set as a calibration target, intrinsic parameter calibration on the sensor based on a plurality of data frames that are collected within the first duration and that are relative to a same traffic participant.

With reference to the second aspect, in a possible implementation, the sensor includes an inertial measurement unit IMU, and the intrinsic parameter calibration unit is specifically configured to: if the vehicle does not shake within second duration, perform, by using the first data set as the calibration target, intrinsic parameter calibration on the sensor based on pose sensing data collected within the second duration.

With reference to the second aspect, in a possible implementation, the extrinsic parameter calibration unit is specifically configured to: in a process in which the vehicle shakes, perform, by using the first data set as the calibration target, joint calibration on the extrinsic parameter of the at least one sensor of the vehicle based on sensing data of the traffic participant collected in the shake process.

With reference to the second aspect, in a possible implementation, the determining unit is specifically configured to: obtain at least one driving parameter via the at least one sensor, where the at least one sensor includes at least one of the following types of sensors: gyroscope, accelerometer, or magnetometer; and determine the driving status of the vehicle based on the at least one driving parameter.

With reference to the second aspect, in a possible implementation, the obtaining unit is specifically configured to: receive the first data set from a cloud server.

With reference to the second aspect, in a possible implementation, the first data set is obtained based on a target tracking model, and the target tracking model includes a deep network model.

With reference to the second aspect, in a possible implementation, the apparatus further includes an error compensation unit, configured to: assign a weight to a confidence level of the at least one sensor based on prior information, to obtain a weight factor associated with the at least one sensor; obtain a pose estimation result of the vehicle based on the weight factor associated with the at least one sensor and sensing data of the at least one sensor; and perform error compensation on a vehicle-mounted component of the vehicle based on the pose estimation result and a three-dimensional rigid body model.

With reference to the second aspect, in a possible implementation, the vehicle-mounted component includes an optical sensing device of the vehicle, and the optical sensing device includes at least one of the following: augmented reality head-up display AR-HUD component, optical projection component, and intelligent ranging component.

According to a third aspect, an embodiment of this application provides an electronic device, including a processor. The processor is coupled to a memory. The processor is configured to execute a computer program or instructions stored in the memory, to enable the electronic device to perform the method according to the foregoing first aspect and any one of the possible implementations of the foregoing first aspect.

According to a fourth aspect, an embodiment of this application provides a vehicle, including a unit configured to implement the method according to the foregoing first aspect and any one of the possible implementations of the foregoing first aspect.

According to a fifth aspect, an embodiment of this application provides a readable storage medium, including a program or instructions. When the program is executed or the instructions are executed, the method according to the foregoing first aspect and any one of the possible implementations of the foregoing first aspect is performed.

According to a sixth aspect, an embodiment of this application provides a computer program product. When the computer program product is run on a computer, the computer is enabled to perform the method according to the foregoing first aspect and any one of the possible implementations of the foregoing first aspect.

According to a seventh aspect, an embodiment of this application provides a terminal device, including a unit configured to implement the method according to the foregoing first aspect and any one of the possible designs of the foregoing first aspect. For example, the terminal device includes but is not limited to: an intelligent transportation device (for example an automobile, a ship, an unmanned aerial vehicle, a train, and a truck), an intelligent manufacturing device (for example, a robot, an industrial device, smart logistics, and smart factory), and an intelligent terminal (a mobile phone, a computer, a tablet computer, a palmtop computer, a desktop computer, a headset, a speaker, a wearable device, a vehicle-mounted device, and the like).

Based on the implementations provided in the foregoing aspects, embodiments of this application may be further combined to provide more implementations.

For technical effects that can be achieved in any possible implementation of any one of the second aspect to the seventh aspect, refer to descriptions of technical effects that can be achieved in any possible implementation of the first aspect. Repeated parts are not described.

BRIEF DESCRIPTION OF DRAWINGS

FIG. 1 is a diagram of an application scenario to which an embodiment of this application is applicable;

FIG. 2 is a diagram of a principle of a calibration method according to an embodiment of this application;

FIG. 3 is a schematic flowchart of a calibration method according to an embodiment of this application;

FIG. 4 is a schematic flowchart of a calibration method according to an embodiment of this application;

FIG. 5 is a diagram of a structure of a calibration apparatus according to an embodiment of this application; and

FIG. 6 is a diagram of a structure of a communication apparatus according to an embodiment of this application.

DESCRIPTION OF EMBODIMENTS

Embodiments of this application provide a method and an apparatus for calibrating a sensor, to implement universal adaptive calibration on a plurality of sensors, so as to improve fusion precision of sensing information of the sensors. The method and the apparatus are based on a same technical concept. Because problem-resolving principles of the method and the apparatus are similar, mutual reference may be made to implementations of the apparatus and the method, and repeated parts are not described. In addition, in embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

It should be noted that, in embodiments of this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

In addition, unless otherwise specified, ordinal numbers such as "first" and "second" mentioned in embodiments of this application are used to distinguish between a plurality of objects, but are not used to limit priorities or importance of the plurality of objects. For example, a first sensor and a second sensor are merely used to distinguish between different sensors, but do not indicate different priorities, importance degrees, or the like of the two sensors.

A calibration solution for s sensor provided in embodiments of this application may be applied to a plurality of types of sensors. For example, the sensors may include but are not limited to a gyroscope, an accelerometer, a magnetometer, or a vehicle-mounted optical sensing component, for example, an augmented reality head-up display (Augmented Reality Head-Up Display, AR-HUD) component, an optical projection component (for example, a smart automobile light), or an intelligent ranging component (for example, an adaptive ranging component). More specifically, the sensors to which the calibration solution is applicable may be applied to a vehicle scenario, or may be applied to an unmanned aerial vehicle scenario, an airplane scenario, or the like. In these scenarios, because of a road condition (for example, road surface flatness) or an environment (for example, weather impact such as wind or airflow), a vehicle body in which a sensor is located shakes violently, causing a sensing error problem. Therefore, the sensor used needs to be calibrated in time, or sensing information needs to be compensated in time, to implement more precise detection.

For ease of understanding, the following uses a method for calibrating a sensor and applied to the vehicle field as an example to describe details of the method. It should be understood that the vehicle herein is an example of an intelligent transportation device, and the vehicle specifically may be an automobile, a ship, an unmanned aerial vehicle, a train, a truck, or the like. In another optional implementation, the vehicle may be replaced with a smart manufacturing device, including but not limited to a robot, an industrial device, a smart logistics device, a smart factory device, or the like. In another optional implementation, the vehicle may be replaced with an intelligent terminal, including but not limited to a mobile phone, a computer, a tablet computer, a palmtop computer, a desktop computer, a headset, a speaker, a wearable device, a vehicle-mounted device, and the like. Details are not described herein.

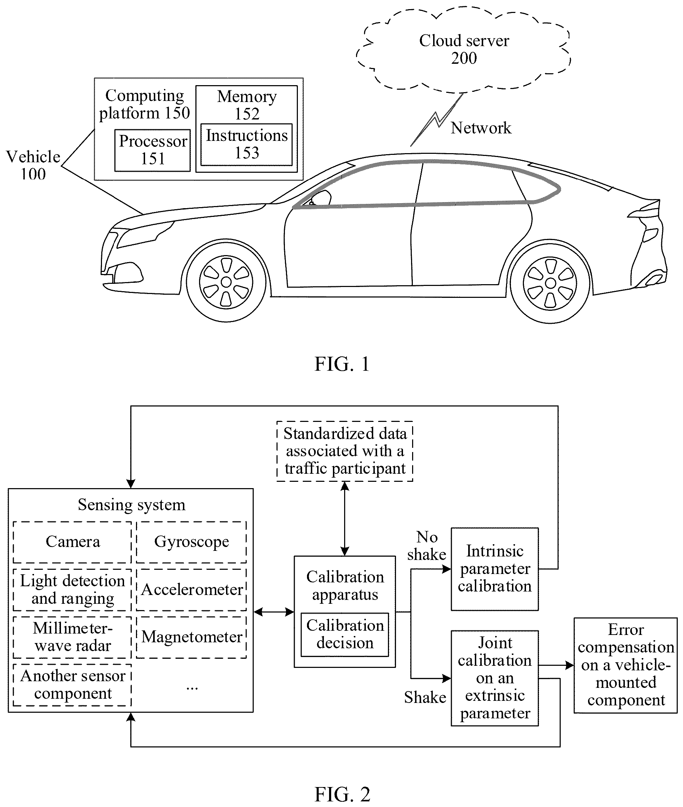

FIG. 1 is a diagram of an application scenario to which an embodiment of this application is applicable. In the application scenario, a vehicle 100 may be included. In a possible implementation, the application scenario may further include a cloud server 200. The vehicle 100 and the cloud server 200 may communicate with each other through a network. In an embodiment, the cloud server 200 may alternatively be implemented by using a virtual machine.

Some or all functions of the vehicle 100 are controlled by a computing platform 150 (or referred to as a computer system). The computing platform 150 may include at least one processor 151. The processor 151 may execute instructions 153 stored in a non-transitory computer-readable medium, for example, a memory 152. In some embodiments, the computing platform 150 may alternatively be a plurality of computing devices that control an individual component or a subsystem of the vehicle 100 in a distributed manner. The processor 151 may be any conventional processor, for example, a central processing unit (central processing unit, CPU). Alternatively, the processor 151 may further include, for example, a graphics processing unit (graphics processing unit, GPU), a field programmable gate array (field programmable gate array, FPGA), a system-on-chip (system-on-chip, SoC), an application-specific integrated circuit (application-specific integrated circuit, ASIC), or a combination thereof.

Optionally, the foregoing vehicle 100 may be a car, a truck, a motorcycle, a bus, a ship, an airplane, a helicopter, a lawn mower, a recreational vehicle, an amusement park vehicle, a construction device, a trolley, a golf cart, a train, or the like. This is not specifically limited in embodiments of this application. In a possible implementation, the vehicle 100 may be an electric vehicle (Electric Vehicle, EV), for example, a two-wheel drive electric vehicle or a four-wheel drive electric vehicle. This is not limited in embodiments of this application.

A structure of the vehicle in FIG. 1 should not be understood as a limitation on embodiments of this application.

The calibration method in embodiments of this application may be implemented by a calibration apparatus. The calibration apparatus may be an independent apparatus, or may be a chip or a component in the vehicle 100 shown in FIG. 1, or may be a software module, and may be deployed on a related vehicle-mounted device of the vehicle 100. A product form and a deployment manner of the calibration apparatus are not limited in embodiments of this application. During specific implementation, a same calibration apparatus may be used to calibrate intrinsic parameters and/or extrinsic parameters of different sensors, or different calibration apparatuses may be used to calibrate intrinsic parameters and/or extrinsic parameters of associated sensors. This is not limited in embodiments of this application. For ease of understanding and description, the following describes a calibration solution in embodiments of this application by using an example in which a same calibration apparatus implements a method for calibrating intrinsic parameters and/or extrinsic parameters of different sensors.

Refer to FIG. 2. The calibration apparatus may interact with another module in a vehicle to implement the calibration solution. For example, the vehicle may have a sensing system. According to an aspect, an at least one sensor may include an inertial measurement unit (Inertial Measurement Unit, IMU), for example, include a gyroscope, an accelerometer, or a magnetometer; and may be configured to collect different driving parameters of the vehicle, for example, an angular velocity, angular acceleration, and a heading angle of the vehicle, to evaluate a driving status of the vehicle, for example, whether the vehicle is currently in a stopped state, in a stable running state, or in a shake state (for example, a shake caused by a bump road condition or caused by a speed bump, which is not limited in embodiments of this application).

In addition, the at least one sensor may include but is not limited to a camera (camera), a light detection and ranging (light detection and ranging, LIDAR), a millimeter-wave radar (millimeter-wave radar, RADAR), or another sensor component, and may keep monitoring an environment around the vehicle and collecting data at all times, to identify at least one traffic participant in the environment in which the vehicle is currently located. The at least one traffic participant may be any traffic participant other than the vehicle in the environment in which the vehicle is located, and includes but is not limited to a current lane of the vehicle and a lane line of the current lane; a vehicle ahead of the vehicle and a vehicle behind the vehicle on the current lane; a lane adjacent to the current lane and a lane line of the adjacent lane; several other vehicles on the adjacent lane; a pedestrian on the current lane, the adjacent lane, or a road intersection; and various traffic facilities, such as a crosswalk line, a road side unit (Road Side Unit, RSU), a traffic signal light (for example, a motor vehicle signal light, a non-motor vehicle signal light, a crosswalk signal light, a direction indicator light, a lane signal light, a flash signal light, or a signal light on a level crossing of a road and a railway), a fence, a lighting facility, a sight line induction sign, a road reflector, and a road message board. In an optional implementation, the at least one traffic participant may be a traffic participant having a standardized size.

The calibration apparatus may make a calibration decision based on the driving status of the vehicle and a first data set associated with a first traffic participant, to determine how to perform intrinsic parameter calibration and/or extrinsic parameter calibration on the at least one sensor of the vehicle.

For example, the first data set may include standardized data of the at least one traffic participant. If it is detected that the vehicle does not shake, for example, the vehicle is in a static state or the stable running state, the calibration apparatus may perform, by using the first data set as a calibration target, intrinsic parameter calibration on the sensor of the vehicle based on the first data set, for example, perform intrinsic parameter calibration on the gyroscope, or perform intrinsic parameter calibration on the accelerometer, or perform intrinsic parameter calibration on the magnetometer. If it is detected that the vehicle shakes, the calibration apparatus may perform, by using the first data set as a calibration target, joint calibration on an extrinsic parameter of the at least one sensor of the vehicle based on the first data set, for example, perform joint calibration on an extrinsic parameter of the gyroscope, an extrinsic parameter of the accelerometer, and an extrinsic parameter of the magnetometer.

It should be understood that, during specific implementation, the standardized data associated with the traffic participant may be stored in a media medium that can be accessed by the calibration apparatus, for example, a head unit storage medium, a cloud server, or a third-party storage device. This is not limited in embodiments of this application.

After calibration is completed, in an optional implementation, the calibration apparatus may further assign weights to confidence levels of different sensors based on an identified relative position of the at least one traffic participant and an output value of the IMU, to obtain weight factors, perform complementary filtering for solving to obtain a final pose estimation result; and construct a transform matrix between the IMU and another vehicle-mounted component based on the extrinsic parameter, to convert an estimation result of the IMU into the vehicle-mounted component via a three-dimensional rigid body model and perform error compensation. For example, the vehicle-mounted component may be an optical sensing component, including but not limited to an AR-HUD component, an optical projection component (for example, a smart automobile light), or an intelligent ranging component (for example, an adaptive ranging component).

In the foregoing method, the scenario element (standardized traffic participant) is used as a reference to replace the calibration target, to perform intrinsic parameter calibration and/or extrinsic parameter calibration on the vehicle-mounted sensor. The method for calibrating the vehicle-mounted sensor can be decoupled from a medium like a three-dimensional radar sensor, and a large quantity of data sets are not needed to train a deep learning model used for calibration. This can greatly reduce calibration time and labor costs, so that the calibration method is universal, an error of joint calibration on a plurality of sensors is reduced, and fusion precision of sensor information is improved. This method can reduce an estimation error of the sensor in a process in which the vehicle shakes, and can also provide safety for vehicle driving, to provide auxiliary support for safe driving of the vehicle.

For ease of understanding, the following describes the calibration method in embodiments of this application by using an example in which the vehicle-mounted component is a vehicle-mounted optical sensing device.

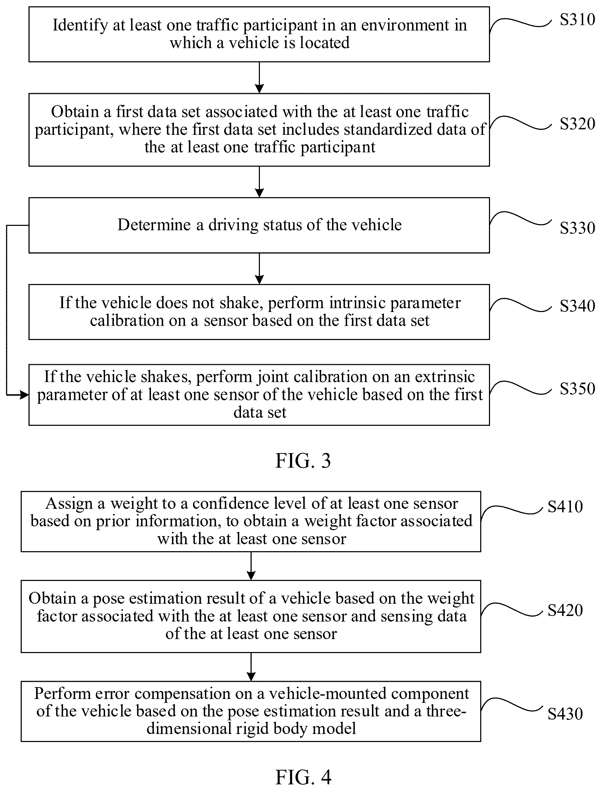

As shown in FIG. 3, the calibration method may include the following steps.

S310: A calibration apparatus identifies at least one traffic participant in an environment in which a vehicle is located.

The at least one traffic participant may include any traffic participant other than the vehicle in the environment in which the vehicle is located, and includes but is not limited to a current lane of the vehicle and a lane line of the current lane; a vehicle ahead of the vehicle and a vehicle behind the vehicle on the current lane; a lane adjacent to the current lane and a lane line of the adjacent lane; several other vehicles on the adjacent lane; a pedestrian on the current lane, the adjacent lane, or a road intersection; and various traffic facilities, such as a crosswalk line, a road side unit (Road Side Unit, RSU), a traffic signal light (for example, a motor vehicle signal light, a non-motor vehicle signal light, a crosswalk signal light, a direction indicator light, a lane signal light, a flash signal light, or a signal light on a level crossing of a road and a railway), a fence, a lighting facility, a sight line induction sign, a road reflector, and a road message board.

In an optional implementation, the at least one traffic participant may be a traffic participant having a standardized size. "Standardized" may refer to an international standard, a standard of a country, a standard of a province, a city, a county, a town, or the like, or a standard of a specified area (for example, a smart factory). An implementation of "standardized" is not limited in embodiments of this application.

During specific implementation of S310, the calibration apparatus may identify, using at least one sensor disposed on the vehicle and a target detection algorithm, the at least one traffic participant in the environment in which the vehicle is located.

S320: The calibration apparatus obtains a first data set associated with the at least one traffic participant, where the first data set includes standardized data of the at least one traffic participant.

In an example, when S320 is implemented, the calibration apparatus may receive the first data set from a cloud server in real time. Alternatively, in another example, a local storage device of the vehicle may prestore common standardized data of a plurality of types of traffic participants. During implementation of S320, the calibration apparatus may directly obtain the first data set from the local storage device of the vehicle. A manner of obtaining the first data set is not limited in embodiments of this application.

It should be noted that, in a specific time period, standardized data of a same traffic participant is usually stable. The calibration apparatus needs to perform S320 only once in the time period, and does not need to perform S320 repeatedly, so that energy consumption can be reduced.

In an optional implementation, the standardized data in the first data set may be obtained based on a target tracking model, and the target tracking model may include a deep network model, for example, a DarkNet network. The target tracking model may construct a standard traffic identification data set (including a picture and annotation information) based on obstacle information in the environment in which the vehicle is currently located, and complete training the first data set based on transfer learning. In an optional implementation, at least 50 pieces of data of each type may be obtained, and training iterations are performed more than 5,000 times, to ensure accuracy of obtained standardized data.

S330: The calibration apparatus determines a driving status of the vehicle.

During specific implementation, the calibration apparatus obtains at least one driving parameter via the at least one sensor of the vehicle, and determines the driving status of the vehicle based on the at least one driving parameter.

For example, the at least one sensor may include at least one of the following types of sensors: gyroscope, accelerometer, or magnetometer. The gyroscope, the accelerometer, or the magnetometer may be arranged at a center position of a vehicle roof on a vehicle body of the vehicle, or may be arranged along a same vertical line as a gravity center of the vehicle body and more horizontally arranged. The gyroscope may be configured to collect angular velocities of three rotational degrees of freedom (for example, a yaw angle, a roll angle, or a pitch angle) of the vehicle body. In an optional implementation, a value of the angular velocity may alternatively be obtained by performing time integration on an angular acceleration value. The accelerometer may be configured to collect acceleration of the three rotational degrees of freedom of the vehicle body. The magnetometer may be used to measure the vehicle body at one rotational degree of freedom (for example, the yaw angle).

An example in which the driving status of the vehicle is evaluated based on the acceleration is used. An acceleration threshold may be preset, for example, 1 m/s^2. If an acceleration value obtained by the calibration apparatus is less than the acceleration threshold, it may be considered that the vehicle is in a stable running state. If an acceleration value obtained by the calibration apparatus is greater than or equal to the acceleration threshold, it may be considered that the vehicle shakes. If both a linear velocity and an acceleration value of the vehicle that are obtained by the calibration apparatus are lower than corresponding thresholds (for example, a linear velocity threshold is 1 m/s, and the acceleration threshold is 1 m/s^2), it may be considered that the vehicle is in a parking state.

It should be understood that, a manner of determining the driving status of the vehicle in embodiments of this application is merely used as an example herein, and does not constitute any limitation. In another embodiment, the calibration apparatus may alternatively determine the driving status of the vehicle in another means. Details are not described herein.

S340: If the vehicle does not shake, the calibration apparatus performs intrinsic parameter calibration on a sensor based on the first data set.

For example, the sensor is a camera. During specific implementation of S340, if the vehicle does not shake within first duration, for example, the vehicle is in the stable running state, the calibration apparatus performs, by using the first data set as a calibration target, intrinsic parameter calibration on the sensor based on a plurality of data frames that are collected within the first duration and that are relative to a same traffic participant. In this process, the calibration apparatus may, for example, obtain intrinsic parameter information of the camera by using Zhang Zhengyou's intrinsic parameter calibration method, for example, an affine transformation matrix from an image coordinate system to a pixel coordinate system.

For example, the sensor is an IMU (for example, including a gyroscope, an accelerometer, and a magnetometer). During specific implementation of S340, the vehicle does not shake within second duration, for example, the vehicle is in the stable running state, the calibration apparatus performs, by using the first data set as the calibration target, intrinsic parameter calibration on the sensor based on pose sensing data collected within the second duration. In this process, for example, the calibration apparatus may complete intrinsic parameter calibration by using a calibration tool Kalibr.

S350: If the vehicle shakes, the calibration apparatus performs joint calibration on an extrinsic parameter of the at least one sensor of the vehicle based on the first data set.

For example, the sensor is an IMU (for example, including a gyroscope, an accelerometer, and a magnetometer). During specific implementation of S350, in a process in which the vehicle shakes, the calibration apparatus may perform, by using the first data set as the calibration target, joint calibration on the extrinsic parameter of the at least one sensor of the vehicle based on sensing data of a traffic participant or status information of the calibration apparatus that is collected in the shake process. In this process, for example, the calibration apparatus may complete extrinsic parameter calibration by using the calibration tool Kalibr.

Therefore, according to the foregoing method, the calibration apparatus can use a scenario element (standardized traffic participant) as a reference to replace the calibration target, to perform intrinsic parameter calibration and/or extrinsic parameter calibration on a vehicle-mounted sensor. The method for calibrating the vehicle-mounted sensor can be decoupled from a medium like a three-dimensional radar sensor, and a large quantity of data sets are not needed to train a deep learning model used for calibration. This can greatly reduce calibration time and labor costs, so that the calibration method is universal, an error of joint calibration on a plurality of sensors is reduced, and fusion precision of sensor information is improved.

After sensor calibration is completed, in an optional implementation, the calibration apparatus may further perform error compensation on a vehicle-mounted component that provides a driving assistance function based on the at least one sensor of the vehicle, to implement anti-shake correction on the vehicle-mounted component, and ensure precise implementation of the driving assistance function.

For example, the at least one sensor of the vehicle includes a gyroscope, an accelerometer, and a magnetometer, and the vehicle-mounted component includes a vehicle-mounted optical sensing component. As shown in FIG. 4, the method may further include the following steps.

S410: A calibration apparatus assigns a weight to a confidence level of at least one sensor based on prior information, to obtain a weight factor associated with the at least one sensor.

During specific implementation, the calibration apparatus may capture different traffic participants' poses relative to a vehicle body based on a camera, estimate values of position errors with an IMU, and normalize the pose errors, to obtain a corresponding weight factor.

For example, parameters $w_1$, $w_2$, and $w_3$ may be used to respectively represent weight factors corresponding to the gyroscope, the accelerometer, and the magnetometer, and these weight factors may satisfy the following expression (1):

$$w_1 + w_2 + w_3 = 1 \qquad (1)$$

Input accuracy of the magnetometer is usually the highest, accuracy of the gyroscope is high in short time, and accuracy of the accelerometer is high in long time. Therefore, values of $w_1$ and $w_2$ may change over time.

S420: The calibration apparatus obtains a pose estimation result of a vehicle based on the weight factor associated with the at least one sensor and sensing data of the at least one sensor.

Specifically, for example, the calibration apparatus may perform weighted summation based on the weight factor associated with the at least one sensor and the sensing data of the at least one sensor, to obtain an accurate estimated value of each rotation angle.

S430: The calibration apparatus performs error compensation on a vehicle-mounted component of the vehicle based on the pose estimation result and a three-dimensional rigid body model.

Specifically, for example, the calibration apparatus may construct a transformation matrix from the IMU to an optical sensing component based on an extrinsic parameter, and convert the estimation result of the IMU into the optical sensing component via the three-dimensional rigid body model, to perform projection compensation.

Therefore, according to the foregoing method, after the at least one sensor of the vehicle is calibrated online, an error compensation method can be provided for the vehicle-mounted component that uses the sensing data of the at least one sensor, to reduce an estimation error of the sensor in a process in which the vehicle shakes, and can also provide safety for vehicle driving, to provide auxiliary support for safe driving of the vehicle.

An embodiment of this application further provides a calibration apparatus, configured to perform the calibration method in the foregoing method embodiments. For related features, refer to the foregoing method embodiments. Details are not described herein again.

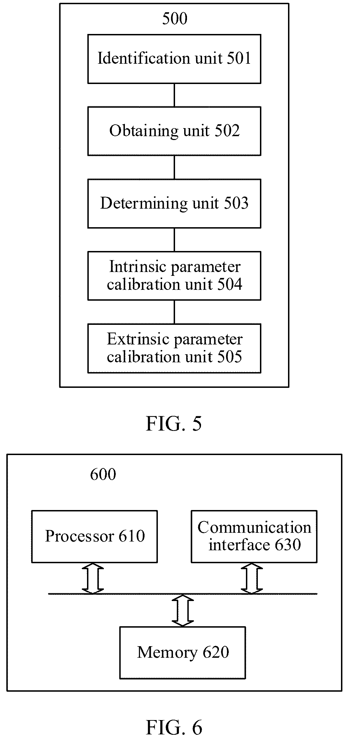

As shown in FIG. 5, an apparatus 500 may include: an identification unit 501, configured to identify at least one traffic participant in an environment in which a vehicle is located; an obtaining unit 502, configured to obtain a first data set associated with the at least one traffic participant, where the first data set includes standardized data of the at least one traffic participant; a determining unit 503, configured to determine a driving status of the vehicle; an intrinsic parameter calibration unit 504, configured to: if the vehicle does not shake, perform intrinsic parameter calibration on a sensor based on the first data set; and an extrinsic parameter calibration unit 505, configured to: if the vehicle shakes, perform joint calibration on an extrinsic parameter of at least one sensor of the vehicle based on the first data set. For a specific implementation, refer to the method steps implemented by the calibration apparatus in the foregoing method embodiments. Details are not described herein again.

It should be understood that division of the units in the foregoing apparatus is merely logical function division. During actual implementation, all or some of the units may be integrated into one physical entity, or may be physically separated. In addition, the units in the apparatus may be implemented in a form of software invoked by a processor. For example, the apparatus includes a processor. The processor is connected to a memory. The memory stores instructions. The processor invokes the instructions stored in the memory, to implement any one of the foregoing methods or implement functions of units of the apparatus. The processor is, for example, a general-purpose processor, for example, a central processing unit (Central Processing Unit, CPU) or a microprocessor. The memory is a memory inside the apparatus or a memory outside the apparatus. Alternatively, the units in the apparatus may be implemented in a form of a hardware circuit, and functions of some or all units may be implemented by designing the hardware circuit. The hardware circuit may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (Field Programmable Gate Array, FPGA) is used as an example, and the field programmable gate array may include a large quantity of logic gate circuits. A configuration file is used to configure a connection relationship between logic gate circuits, to implement functions of some or all of the foregoing units. All the units of the foregoing apparatus may be implemented in a form of software invoked by the processor, or all the units may be implemented in a form of a hardware circuit, or some units may be implemented in a form of the software invoked by the processor, and a remaining part may be implemented in a form of the hardware circuit.

In embodiments of this application, the processor is a circuit with a signal processing capability. In an implementation, the processor may be a circuit with an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that each unit of the foregoing apparatus may be one or more processors (or processing circuits) configured to implement the foregoing methods, for example, a CPU, a GPU, an NPU, a TPU, a DPU, a microprocessor, a DSP, an ASIC, or an FPGA, or a combination of at least two of these processor forms.

In addition, all or some of the units of the foregoing apparatus may be integrated together, or may be implemented independently. In an implementation, these units are integrated together and implemented in a form of a system-on-a-chip (system-on-a-chip, SoC). The SoC may include at least one processor, configured to implement any one of the foregoing methods or implement functions of the units of the apparatus. Types of the at least one processor may be different. For example, the at least one processor includes a CPU and an FPGA, a CPU and an artificial intelligence processor, or a CPU and a GPU.

In a simple embodiment, a person skilled in the art may figure out that the communication apparatus in the foregoing embodiment may be in a form shown in FIG. 6.

An apparatus 600 shown in FIG. 6 includes at least one processor 610 and a communication interface 630. In an optional design, the apparatus may further include a memory 620.

A specific connection medium between the foregoing processor 610 and the memory 620 is not limited in embodiments of this application.

In the apparatus shown in FIG. 6, when communicating with another device, the processor 610 may perform data transmission through the communication interface 630.

When the communication apparatus is in the form shown in FIG. 6, the processor 610 in FIG. 6 may invoke computer-executable instructions stored in the memory 620, to enable the apparatus 600 to perform any one of the foregoing method embodiments.

An embodiment of this application further relates to a chip system. The chip system includes a processor, configured to invoke a computer program or computer instructions stored in a memory, to enable the processor to perform the method according to any one of the foregoing embodiments.

In a possible implementation, the processor may be coupled to the memory through an interface.

In a possible implementation, the chip system may alternatively directly include the memory. The memory stores the computer program or the computer instructions.

For example, the memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further relates to a processor. The processor is configured to invoke a computer program or computer instructions stored in a memory, to enable the processor to perform the method according to any one of the foregoing embodiments.

In an example, in embodiments of this application, the processor is an integrated circuit chip, and has a signal processing capability. For example, the processor may be an FPGA, may be a general-purpose processor, a DSP, an ASIC, or another programmable logic device, a discrete gate or transistor logic device, or a discrete hardware component, or may be a system-on-a-chip (system-on-a-chip, SoC), or may be a CPU, or may be a network processor (network processor, NP), or may be a microcontroller unit (microcontroller unit, MCU), or may be a PLD or another integrated chip, and may implement or perform the methods, steps, and logical block diagrams disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It should be understood that embodiments of this application may be provided as a method, a system, or a computer program product.

In a possible implementation, an embodiment of this application provides a computer-readable storage medium. The computer-readable storage medium stores program code. When the program code is run on a computer, the computer is enabled to perform the foregoing method embodiments.

In a possible implementation, an embodiment of this application provides a computer program product. When the computer program product is run on a computer, the computer is enabled to perform the foregoing method embodiments.

Therefore, this application may use a form of hardware-only embodiments, software-only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

These computer program instructions may be stored in a computer-readable memory that can indicate the computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. In this case, this application is intended to cover these modifications and variations of embodiments of this application provided that they fall within the scope of protection defined by the following claims and their equivalent technologies. In embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

**Claims**

1.  A method for calibrating a sensor, wherein the sensor is one of at least one sensor disposed on a vehicle, and the method comprises:

    identifying at least one traffic participant in an environment in which the vehicle is located;
    obtaining a first data set associated with the at least one traffic participant, wherein the first data set comprises standardized data of the at least one traffic participant;
    determining a driving status of the vehicle; and
    if the vehicle does not shake, performing intrinsic parameter calibration on the sensor based on the first data set; or
    if the vehicle shakes, performing joint calibration on an extrinsic parameter of the at least one sensor of the vehicle based on the first data set.

2.  The method according to claim 1, wherein the sensor comprises a camera, and if the vehicle does not shake, the performing intrinsic parameter calibration on the sensor based on the first data set comprises:
    if the vehicle does not shake within first duration, performing, by using the first data set as a calibration target, intrinsic parameter calibration on the sensor based on a plurality of data frames that are collected within the first duration and that are relative to a same traffic participant.

3.  The method according to claim 1 or 2, wherein the sensor comprises an inertial measurement unit IMU, and if the vehicle does not shake, the performing intrinsic parameter calibration on the sensor based on the first data set comprises:
    if the vehicle does not shake within second duration, performing, by using the first data set as the calibration target, intrinsic parameter calibration on the sensor based on pose sensing data collected within the second duration.

4.  The method according to any one of claims 1 to 3, wherein if the vehicle shakes, the performing joint calibration on the extrinsic parameter of the at least one sensor of the vehicle based on the first data set comprises:
    in a process in which the vehicle shakes, performing, by using the first data set as the calibration target, joint calibration on the extrinsic parameter of the at least one sensor of the vehicle based on sensing data of a traffic participant collected in the shake process.

5.  The method according to any one of claims 1 to 4, wherein the determining the driving status of the vehicle comprises:

    obtaining at least one driving parameter via the at least one sensor, wherein the at least one sensor comprises at least one of the following types of sensors: gyroscope, accelerometer, or magnetometer; and
    determining the driving status of the vehicle based on the at least one driving parameter.

6.  The method according to any one of claims 1 to 5, wherein the obtaining the first data set associated with the at least one traffic participant comprises:
    receiving the first data set from a cloud server.

7.  The method according to claim 6, wherein the first data set is obtained based on a target tracking model, and the target tracking model comprises a deep network model.

8.  The method according to any one of claims 1 to 7, wherein the method further comprises:

    assigning a weight to a confidence level of the at least one sensor based on prior information, to obtain a weight factor associated with the at least one sensor;
    obtaining a pose estimation result of the vehicle based on the weight factor associated with the at least one sensor and sensing data of the at least one sensor; and
    performing error compensation on a vehicle-mounted component of the vehicle based on the pose estimation result and a three-dimensional rigid body model.

9.  The method according to claim 8, wherein the vehicle-mounted component comprises an optical sensing device of the vehicle, and the optical sensing device comprises at least one of the following: augmented reality head-up display AR-HUD component, optical projection component, and intelligent ranging component.

10. An apparatus for calibrating a sensor, wherein the

**EP 4 738 258 A1**

sensor is one of at least one sensor disposed on a vehicle, and the apparatus comprises:

> an identification unit, configured to identify at least one traffic participant in an environment in which the vehicle is located;
> an obtaining unit, configured to obtain a first data set associated with the at least one traffic participant, wherein the first data set comprises standardized data of the at least one traffic participant;
> a determining unit, configured to determine a driving status of the vehicle;
> an intrinsic parameter calibration unit, configured to: if the vehicle does not shake, perform intrinsic parameter calibration on the sensor based on the first data set; and
> an extrinsic parameter calibration unit, configured to: if the vehicle shakes, perform joint calibration on an extrinsic parameter of the at least one sensor of the vehicle based on the first data set.

11. An electronic device, comprising a processor, wherein the processor is coupled to a memory; and the processor is configured to execute a computer program or instructions stored in the memory, to enable the electronic device to perform the method according to any one of claims 1 to 9.

12. A vehicle, comprising a unit configured to implement the method according to any one of claims 1 to 9.

13. A readable storage medium, comprising a program or instructions, wherein when the program is executed or the instruction are executed, the method according to any one of claims 1 to 9 is performed.

14. A computer program product, wherein when the computer program product is run on a computer, the computer is enabled to perform the method according to any one of claims 1 to 9.

FIG. 1

FIG. 2

Identify at least one traffic participant in an environment in which a vehicle is located ⌒ S310

Obtain a first data set associated with the at least one traffic participant, where the first data set includes standardized data of the at least one traffic participant ⌒ S320

Determine a driving status of the vehicle ⌒ S330

If the vehicle does not shake, perform intrinsic parameter calibration on a sensor based on the first data set ⌒ S340

If the vehicle shakes, perform joint calibration on an extrinsic parameter of at least one sensor of the vehicle based on the first data set ⌒ S350

FIG. 3

Assign a weight to a confidence level of at least one sensor based on prior information, to obtain a weight factor associated with the at least one sensor ⌒ S410

Obtain a pose estimation result of a vehicle based on the weight factor associated with the at least one sensor and sensing data of the at least one sensor ⌒ S420

Perform error compensation on a vehicle-mounted component of the vehicle based on the pose estimation result and a three-dimensional rigid body model ⌒ S430

FIG. 4

500

Identification unit 501

Obtaining unit 502

Determining unit 503

Intrinsic parameter
calibration unit 504

Extrinsic parameter
calibration unit 505

FIG. 5

600

Processor 610

Communication
interface 630

Memory 620

FIG. 6

## INTERNATIONAL SEARCH REPORT

| International application No. |
|---|
| **PCT/CN2024/113087** |

**A. CLASSIFICATION OF SUBJECT MATTER**

G01S7/40(2006.01)i;  G01S7/497(2006.01)i;  G01S7/52(2006.01)i;  G01C25/00(2006.01)i;  G06T7/80(2017.01)i

According to International Patent Classification (IPC) or to both national classification and IPC

**B. FIELDS SEARCHED**

Minimum documentation searched (classification system followed by classification symbols)

IPC: G01S, G01C, G06T, G06F, G06V

Documentation searched other than minimum documentation to the extent that such documents are included in the fields searched

Electronic data base consulted during the international search (name of data base and, where practicable, search terms used)

CNTXT, CNKI, ENTXTC, WPABSC, DWPI: 华为, 王方建, 传感器, 相机, 惯性, 激光, 雷达, 检测, 测量, 标定, 校准, 车辆, 汽车, 交通, 道路, 标志, 标识, 车道线, 识别, 获取, 标准化, 行驶, 状态, 抖动, 路况, 感知, 补偿, 精准, 融合, 联合, 内参, 外参, sensor, camera, inertial, laser, radar, detection, measurement, calibration, vehicle, car, traffic, road, sign, lane, line, identification, acquisition, normalization, travel, condition, jitter, condition, perception, compensation, precision, fusion, association, internal, reference, external

**C. DOCUMENTS CONSIDERED TO BE RELEVANT**

| Category* | Citation of document, with indication, where appropriate, of the relevant passages | Relevant to claim No. |
|---|---|---|
| Y | US 2020226790 A1 (INTEL CORP.) 16 July 2020 (2020-07-16)<br>description, paragraphs [0017]-[0296], and figures 1-13 | 1-14 |
| Y | CN 110836656 A (SHENZHEN HORIZON ROBOTIC TECHNOLOGY CO., LTD.) 25 February 2020 (2020-02-25)<br>description, paragraphs [0005]-[0084], and figures 1-8 | 1-14 |
| A | CN 109211298 A (BAIDU ONLINE NETWORK TECHNOLOGY (BEIJING) CO., LTD.) 15 January 2019 (2019-01-15)<br>entire document | 1-14 |
| A | CN 113340334 A (NEOLIX HUITONG (BEIJING) TECHNOLOGY CO., LTD.) 03 September 2021 (2021-09-03)<br>entire document | 1-14 |
| A | CN 115144825 A (HUAWEI TECHNOLOGIES CO., LTD.) 04 October 2022 (2022-10-04)<br>entire document | 1-14 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **04 November 2024** | **08 November 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 738 258 A1**

## INTERNATIONAL SEARCH REPORT

| | International application No. |
|---|---|
| | **PCT/CN2024/113087** |

### C. DOCUMENTS CONSIDERED TO BE RELEVANT

| Category* | Citation of document, with indication, where appropriate, of the relevant passages | Relevant to claim No. |
|---|---|---|
| A | CN 115294211 A (GUANGDONG POLYTECHNIC OF INDUSTRY AND COMMERCE) 04 November 2022 (2022-11-04) entire document | 1-14 |
| A | CN 115546315 A (ZHIDAO NETWORK TECHNOLOGY (BEIJING) CO., LTD.) 30 December 2022 (2022-12-30) entire document | 1-14 |
| A | CN 116524043 A (ZHIDAO NETWORK TECHNOLOGY (BEIJING) CO., LTD.) 01 August 2023 (2023-08-01) entire document | 1-14 |
| A | CN 1918901 A (PANASONIC CORP.) 21 February 2007 (2007-02-21) entire document | 1-14 |
| A | US 2021199479 A1 (GM CRUISE HOLDINGS L.L.C.) 01 July 2021 (2021-07-01) entire document | 1-14 |
| A | WO 2023004719 A1 (HUAWEI TECHNOLOGIES CO., LTD.) 02 February 2023 (2023-02-02) entire document | 1-14 |

Form PCT/ISA/210 (second sheet) (July 2022)

17

## INTERNATIONAL SEARCH REPORT
### Information on patent family members

International application No.

**PCT/CN2024/113087**

| Patent document cited in search report | | | Publication date (day/month/year) | Patent family member(s) | | | Publication date (day/month/year) |
|---|---|---|---|---|---|---|---|
| US | 2020226790 | A1 | 16 July 2020 | EP | 3885792 | A1 | 29 September 2021 |
| | | | | US | 11798191 | B2 | 24 October 2023 |
| CN | 110836656 | A | 25 February 2020 | | None | | |
| CN | 109211298 | A | 15 January 2019 | | None | | |
| CN | 113340334 | A | 03 September 2021 | | None | | |
| CN | 115144825 | A | 04 October 2022 | | None | | |
| CN | 115294211 | A | 04 November 2022 | | None | | |
| CN | 115546315 | A | 30 December 2022 | | None | | |
| CN | 116524043 | A | 01 August 2023 | | None | | |
| CN | 1918901 | A | 21 February 2007 | JP | 2005229529 | A | 25 August 2005 |
| | | | | JP | 3980565 | B2 | 26 September 2007 |
| | | | | US | 2008151053 | A1 | 26 June 2008 |
| | | | | EP | 1718062 | A1 | 02 November 2006 |
| | | | | EP | 1718062 | B1 | 21 January 2015 |
| | | | | WO | 2005079060 | A1 | 25 August 2005 |
| US | 2021199479 | A1 | 01 July 2021 | US | 2023228601 | A1 | 20 July 2023 |
| | | | | US | 12031849 | B2 | 09 July 2024 |
| | | | | US | 11644350 | B2 | 09 May 2023 |
| WO | 2023004719 | A1 | 02 February 2023 | | None | | |

Form PCT/ISA/210 (patent family annex) (July 2022)

**REFERENCES CITED IN THE DESCRIPTION**

**Patent documents cited in the description**

- CN 202311076082